# FASCICULE DE BREVET EUROPEEN

(11) **EP 1 244 583 B1**
(45) Date de publication et mention de la délivrance du brevet: **30.07.2003**
(21) Numéro de dépôt: 00988943.7
(22) Date de dépôt: 15.12.2000
(51) Int. Cl.: B62D 29/00, B62D 25/20, B60P 1/28

(54) **STRUCTURE DE CHARGEMENT A PLATEAU COMPOSITE POUR VEHICULE UTILITAIRE**
LADEBODEN IN VERBUNDBAUWEISE FÜR NUTZFAHRZEUGE
LOADING STRUCTURE WITH COMPOSITE PLATFORM BODY FOR COMMERCIAL VEHICLE

(30) Priorité: 16.12.1999 FR 9915916
(43) Date de publication de la demande: 02.10.2002
(73) Titulaire: Auzou Constructeur Polyester, 28160 Brou (FR)
(72) Inventeur: AUZOU, Karl, F-28600 Luisant (FR)
(74) Mandataire: Pontet, Bernard
(86) Numéro de dépôt international: FR0003568
(87) Numéro de publication internationale: WO01044039

(56) Documents cités:
- EP-A- 0 182 773
- EP-A- 0 787 643
- EP-A- 0 807 566
- DE-A- 19 727 753
- FR-A- 1 603 206
- FR-A- 2 097 625

## Description

La présente invention concerne une structure de chargement à plateau composite pour véhicule utilitaire.

L'invention concerne plus particulièrement, mais non-limitativement les véhicules de transport de matériaux comportant en tant que structure de chargement, soit une benne basculante soit un plateau fixe, notamment lorsqu'ils sont adaptés à un châssis de véhicule léger.

La benne basculante est une structure de chargement usuelle pour le transport de matériaux en vrac qui sont chargés sur cette dernière en position horizontale par un moyen tel que pelleteuse, benne preneuse, élévateur ou trémie. La benne basculante comprend typiquement un faux-châssis fixé sur le châssis du véhicule, et la benne proprement dite est articulée au faux-châssis. Le vidage s'effectue par levage au moyen d'un vérin articulé au faux-châssis et soulevant la benne en exerçant un effort de levage au voisinage du centre de gravité de la charge. Le plateau formant plancher de la benne doit présenter des caractéristiques mécaniques suffisantes pour résister à la chute des matériaux en vrac lors du chargement et aux contraintes résultant du levage.

On connaît également des structures de chargement à plateau fixe tels que plateau à ridelles, caisse isotherme, caisse grand volume, plateau à "ranchers" (les ranchers sont des poteaux latéraux destinés par exemple à supporter une bâche ou encore à retenir un chargement d'éléments longilignes tels que barres, tubes, grumes, planches, etc.).

Les FR-A-2 735 430, FR-A-2 748 705 et EP-A-0 394 131 décrivent des bennes métalliques composées d'éléments soudés.

Le FR-U-2 671 532 décrit un plancher autoporteur destiné à se substituer à un châssis de remorque de véhicule routier. Il comprend à cet effet une structure composite formée de deux parements définissant la face supérieure et la face inférieure respectivement, entre lesquels est agencée une alternance de profilés transversaux et de plaques de mousse. Cette structure de chargement met en cause la conception de l'ensemble du véhicule. Mais dans de nombreux cas, la structure de chargement ne doit venir qu'en complément de la structure de base du véhicule en respectant ses caractéristiques techniques propres, qui incluent une rigidité suffisante pour le bon comportement routier du véhicule. Par conséquent, contrairement à l'enseignement du FR-U-2 671 532, la structure de chargement n'a pas à compléter la rigidité du véhicule. Elle doit par contre avoir ses caractéristiques mécaniques propres pour résister aux efforts dus à la charge et aux manipulations de la charge comme indiqué précédemment.

Il en résulte en général, notamment dans le cas des bennes basculantes, que le véhicule équipé de la structure de chargement présente un poids à vide très élevé. Pour les véhicules légers qui ne doivent pas dépasser un poids total en charge déterminé relativement faible, il n'est pas rare que la charge utile restant disponible ne soit plus que de quelques centaines de kilos.

Le EP 0807566 décrit une structure de chargement pour véhicule selon le préambule de la revendication 1. Cette structure comprend un plateau composite avec des renforts obtenus soit par une conformation particulière de la matière d'âme, soit par des éléments extérieurs au plateau.

Le EP 0787643 décrit un plateau supporté par un châssis croisillonné.

Le but de la présente invention est ainsi de proposer une structure de chargement simple et robuste qui permette d'équiper un châssis cabine préexistant en améliorant la charge utile restant disponible avec le véhicule équipé.

Suivant l'invention, la structure de chargement pour véhicule utilitaire, comprenant au moins un plateau autoporteur réalisé d'un seul tenant en une structure composite comprenant une matrice organique dans laquelle sont noyés des renforts structurels de rigidification et/ou de reprise d'effort, dont certains au moins sont associés à des moyens de liaison avec le reste de la structure porteuse et/ou avec le véhicule, cette matrice définissant une surface d'une peau enveloppant lesdits renforts, est caractérisée en ce que l'un au moins des renforts est une poutre comprenant une âme en mousse entourée d'au moins un drapage de fibres.

Il a été trouvé selon l'invention que la structure composite définissant le plateau peut, même avec les renforts structurels nécessaires pour reprendre et distribuer les charges et efforts subis en service, présenter une masse considérablement diminuée par rapport à celle des constructions métalliques connues pour réaliser ce type d'équipement.

En outre, la structure selon l'invention présente des avantages de longévité, imprutrescibilité, diminution des bruits de fonctionnement et facilité de réparation après des dégâts ponctuels.

Le plateau composite, est réalisable en positionnant judicieusement les divers renforts structurels avant de réaliser un moulage global. L'invention permet ainsi, plus facilement que les constructions métalliques, d'adapter le plateau et par conséquent l'ensemble de la structure de chargement à différents modèles de châssis-cabines, par exemple à des écartements différents entre les longerons du châssis du véhicule.

Il a été constaté de façon surprenante que le plateau selon l'invention supportait efficacement les contraintes sévères de l'application en tant que benne basculante. Par conséquent, le plateau selon l'invention permet la mise en oeuvre dans les applications moins exigeantes, à plateau fixe.

D'autres particularités et avantages de l'invention ressortiront encore de la description ci-après, relative à un exemple non-limitatif.

Aux dessins annexés :
- la figure 1 est une vue latérale d'un véhicule équipé d'une benne basculante constituant une structure de chargement selon l'invention;
- la figure 2 est une vue en perspective de la partie mobile de la benne basculante du véhicule selon la figure 1, avec coupe partielle et arrachement;
- la figure 3 est une vue en coupe transversale du plateau composite suivant l'axe d'articulation avec le vérin;
- la figure 4 est une vue à échelle agrandie du détail IV de la figure 3;
- la figure 5 est une vue en perspective d'un cadre de renfort périphérique;
- la figure 6 est une vue schématique en coupe transversale illustrant la constitution d'une poutre de renfort;
- la figure 7 est une vue analogue à la figure 4 mais en coupe dans un plan voisin de l'axe d'articulation avec le faux-châssis;
- la figure 8 est une vue à échelle agrandie du détail VIII de la figure 3;
- la figure 9 est une vue en perspective d'une ossature de renfort local pour l'articulation avec le vérin;
- la figure 10 est une vue partielle en coupe suivant X-X de la figure 8;
- la figure 11 est une vue schématique en perspective illustrant l'installation d'un poteau d'angle; et
- la figure 12 est une vue en bout, avec coupe transversale partielle, illustrant la structure et l'installation des ridelles.

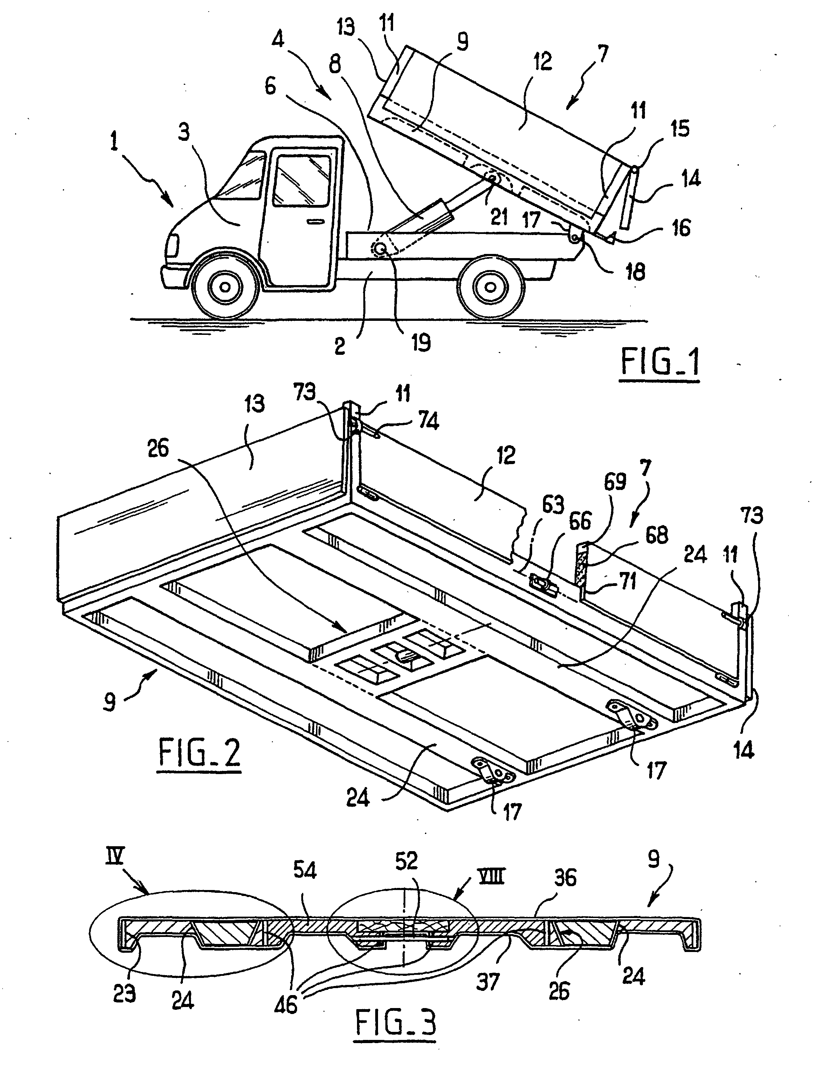

Dans l'exemple représenté à la figure 1, un véhicule utilitaire léger 1 comprenant un châssis 2 pré-équipé d'une cabine 3 a été aménagé avec une structure de chargement 4 du type benne basculante, comprenant un faux-châssis 6 boulonné sur le châssis 2 du véhicule, une benne 7 et un vérin de levage 8. La benne 7 comprend un plateau 9 de forme générale plane, rectangulaire, servant de plancher, des poteaux d'angle 11 s'élevant vers le haut à partir de chacun des quatre angles du plateau 9, des ridelles latérales 12, une ridelle avant 13 et un hayon arrière 14 qui coopère avec un crochet automatique 16. De manière connue en soi, lorsque la benne 7 atteint une certaine inclinaison au cours de son levage, le crochet 16 libère la base du hayon 14 et permet à ce dernier de pivoter autour de son axe d'articulation horizontal supérieur 15 pour s'ouvrir et libérer ainsi le chargement.

Le plateau 9 porte sur sa face inférieure, au voisinage de son bord arrière deux oreilles 17 (visibles superposées à la figure 1) par lesquelles la benne 7 est articulée au faux-châssis 6 suivant un axe de basculement 18 parallèle à la largeur du véhicule.

Le faux-châssis 6 est réalisé par assemblage de profilés, préférentiellement en métal léger. Il porte les renforts nécessaires à la fixation de l'articulation suivant l'axe 18 et pour l'articulation avec le corps du vérin 8 suivant un axe transversal 19 situé à relativement faible distance derrière la cabine 3. L'extrémité mobile du vérin 8 est articulée au plateau 9 suivant un axe transversal 21 situé sensiblement au milieu de la longueur du plateau 9. De manière connue, le vérin est presque horizontal lorsque la benne 7 est baissée. Ainsi, lors du début d'une opération de levage, l'articulation de la benne suivant l'axe de basculement 18 subit une forte réaction vers l'arrière et le plateau est fortement sollicité en compression dans la région située entre l'axe de basculement 18 et l'axe 21 d'articulation avec le vérin. Ensuite, pendant le levage, le plateau 9 tend à fléchir de part et d'autre de l'axe d'articulation 21. L'effort de levage produit en outre une contrainte de poinçonnement à travers le plateau 9.

Le plateau 9, de forme générale rectangulaire, est réalisé en une seule pièce obtenue par moulage. Il comprend (figures 2 à 4) un assemblage de renforts structurels comprenant notamment des éléments de forme en mousse de polyuréthane 22, un cadre périphérique 23, deux poutres longitudinales 24 et un insert 26 de reprise et de distribution des efforts impartis par le vérin 8. L'assemblage jointif de ces renforts est entouré d'une armature appartenant à une peau 27 s'étendant pour l'essentiel le long de toute la surface définissant la forme extérieure du plateau 9. L'armature est par exemple composée d'un tissu de fibres de verre.

L'ensemble composé de l'assemblage de renforts 22, 23, 24, 26 et de l'armature, est noyé dans une matrice organique, par exemple une résine polyester, qui imprègne l'armature, les interstices entre les renforts, et les composants poreux des renforts au voisinage de leur surface respective, de manière à solidariser l'ensemble en un seul bloc. La matrice organique forme avec l'armature ladite peau 27 du plateau et définit une surface de cette peau 27 du côté extérieur à l'armature. La peau 27 peut elle-même être recouverte du côté de l'extérieur par un revêtement résistant à l'abrasion et au choc et produisant un aspect extérieur lisse. Un tel revêtement est par exemple celui connu sous le nom de "gelcoat". Pour la fabrication, on positionne le gel-coat puis le tissu de verre contre les parois d'un moule et d'un contre-moule, on positionne les renforts dans le moule, on place le moule et le contre-moule entre les plateaux d'une presse et on injecte la résine entre le moule et le contre-moule. La résine fait également prise avec le gel-coat qui devient partie intégrante de la peau.

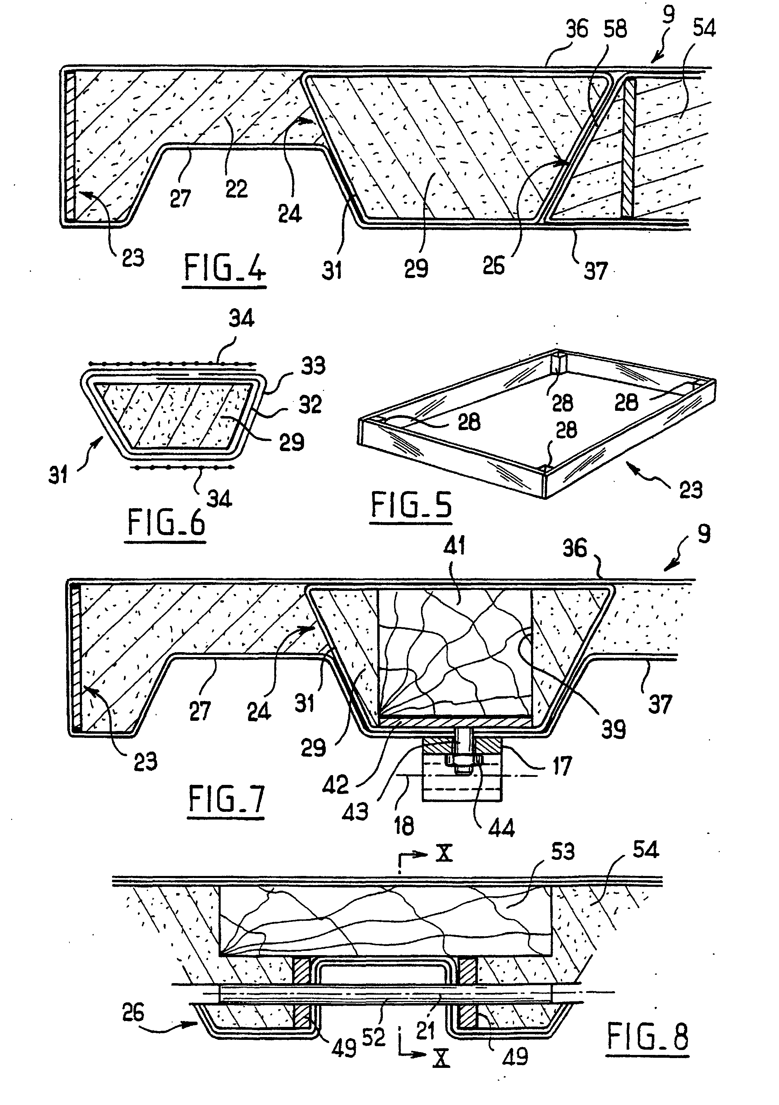

Le cadre 23 (voir aussi figure 5) est adjacent au bord périphérique du plateau 9. Il est composé de fers plats disposés dans des plans perpendiculaires au plan général du plateau 9. Aux angles, les fers plats sont assemblés par soudure l'un avec l'autre ainsi qu'avec un tube métallique de section rectangulaire 28 logé du côté concave de chaque angle du cadre. Une arête extérieure de chaque tube 28 coïncide avec une arête intérieure du cadre formée par des fers plats réunis. La hauteur du tube correspond à la hauteur des fers plats et peut par exemple être de 100 mm. L'épaisseur des fers plats est par exemple de 3 mm.

Les deux poutres de renfort 24 sont chacune réalisées à partir d'une longueur d'un profilé en mousse 29 (figure 4), entourée d'un drapage 31 destiné à accroître sa rigidité.

Comme le montre schématiquement la figure 6, le drapage 31 peut comprendre au moins une nappe périphérique 32 de tissu de fibre de verre (ou "roving"), au moins une nappe périphérique 33 d'un non-tissé en fibre de verre (ou "mat") et, sur la face inférieure et la face supérieure, deux nappes unidirectionnelles 34 avec des fibres disposées parallèlement à la longueur de la poutre pour combattre les allongements dus à la flexion.

La section trapézoidale de chaque poutre 24 est agencée avec la grande base du trapèze en position haute, adjacente à la face supérieure 36 - ou face de chargement - du plateau 9, de façon à améliorer la résistance à l'extension de la face 36 sous l'effet du bombement qui tend à se produire sous l'action du vérin de levage 8. La face inférieure de la poutre de renfort 24 est adjacente à la face inférieure 37 du plateau 9 (figure 4). Lorsque la benne 7 est en position baissée, la face 37 repose sur les longerons du faux-châssis 6 dans les deux régions adjacentes aux poutres de renfort 24. La largeur des poutres de renfort 24 sur leur côté inférieur, donc adjacent à la face inférieure 37 du panneau 9, est choisie suffisamment grande pour accommoder différentes valeurs d'écartement entre les longerons du faux-châssis 6. Ledit écartement est lui-même déterminé par l'écartement entre les longerons 2 du châssis du véhicule 1 à équiper.

Comme le montre la figure 7, les oreilles 17 prévues pour le basculement de la benne sont fixées contre la face inférieure 37 du plateau 9 dans une région adjacente aux poutres de renfort 24. Pour cette fixation, on a formé dans le profilé 29 de chaque poutre 24, au voisinage de l'extrémité arrière du plateau, un évidement 39 dans lequel on a inséré un bloc de bois 41, par exemple en contre-plaqué, sur lequel est appuyée une plaque métallique 42. Le bloc 41 s'étend sur sensiblement toute la hauteur du profilé 29 et se trouve adjacent à la face supérieure 36 du plateau 9. La plaque 42 est adjacente à la face inférieure 37 du plateau 9 et porte des tiges de fixation filetées 43 qui traversent le drapage 31 et la peau 27 pour permettre la fixation des oreilles 17 à l'aide d'écrous 44 vissés sur les tiges 43.

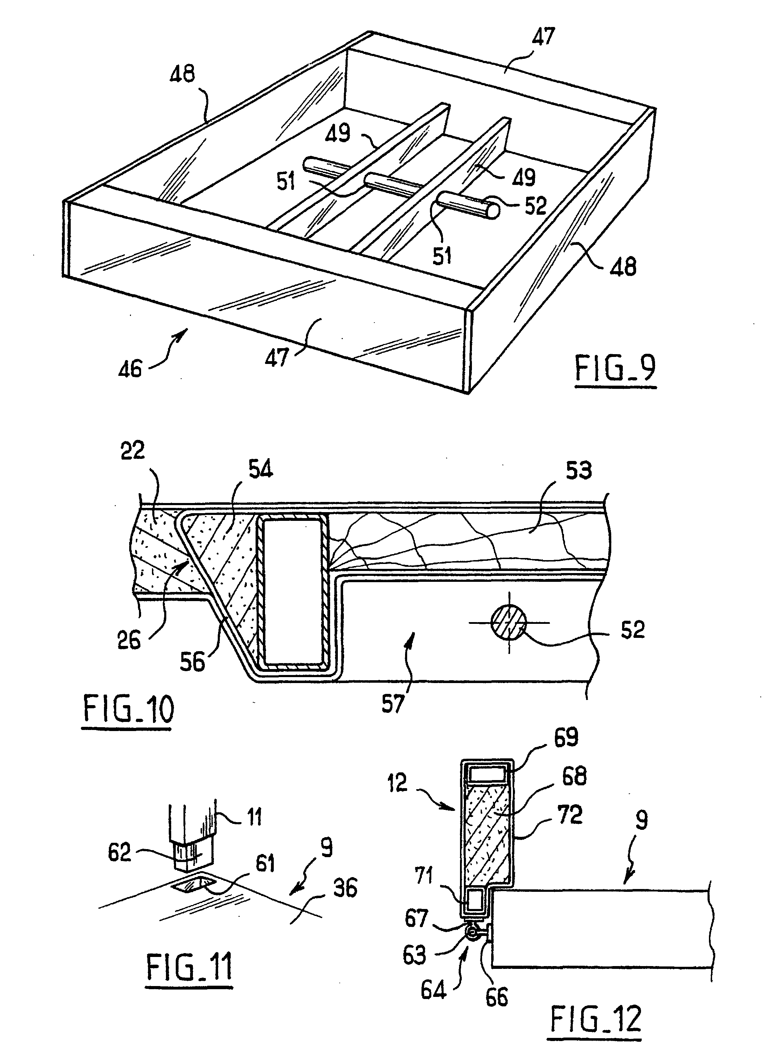

L'insert 26 de reprise des efforts du vérin (figure 2) est intercalé entre les deux poutres de renfort 24. L'insert comprend une ossature métallique 46 (figure 9) comprenant deux tubes transversaux de section rectangulaire 47 formant un cadre avec deux fers plats longitudinaux 48, disposés dans des plans perpendiculaires au plan du plateau 9. La hauteur des tubes 47 et des fers plats 48 correspond sensiblement à l'épaisseur du plateau 9 dans la région du cadre, qui dans l'exemple est la même que l'épaisseur des poutres de renfort 24 et du cadre périphérique 23. L'ossature comprend en outre deux supports longitudinaux 49 s'étendant parallèlement l'un à l'autre à une certaine distance l'un de l'autre et à une certaine distance des fers plats 48. Les extrémités de supports 49 sont soudées aux tubes 47. Ils occupent à peu près la moitié de la hauteur du plateau 9 en étant positionnés du côté de la face inférieure de celui-ci. Les supports 49 sont des fers plats, disposés dans des plans perpendiculaires au plan du plateau 9 et portent deux trous alignés 51 permettant d'y enfiler un arbre 52 qui a une longueur très supérieure à l'écartement entre les deux supports 49 de façon à dépasser de part et d'autre de ceux-ci en direction transversale. L'arbre 52 est destiné à constituer l'axe d'articulation de l'extrémité du vérin.

Comme le montre la figure 8, l'insert 26 comprend en outre un bloc de bois 53 (voir aussi figure 10) sur lequel s'appuie le bord supérieur des deux supports 49 et qui s'étend sur toute la longueur de ceux-ci entre les deux tubes transversaux 47. Des blocs de mousse illustrés par la référence générale 54, emprisonnent le cadre 46, le bloc de bois 53 et les deux régions de l'axe 52 qui sont situées de part et d'autre des supports 49. Un drapage 56 pouvant comporter une ou plusieurs couches de non-tissé en fibre de verre et/ou de tissu de fibre de verre entoure les blocs de mousse 54 et définit la paroi extérieure de l'insert 26 en formant dans l'espace parallélépipédique situé entre les deux tubes transversaux 47 et entre les deux supports longitudinaux 49 un évidement 57 qui est traversé par la partie centrale de l'arbre 52. L'arbre 52 est mis en place après le moulage.

Comme le montre en particulier la figure 4, chaque face latérale 58 de l'insert 26 est avantageusement conformée pour venir s'appuyer sensiblement à plat et sans jeu contre la face latérale correspondante de la poutre de renfort 24 adjacente.

Les éléments de forme 22 remplissent les espaces entre les poutres de renfort 24 et les éléments longitudinaux du cadre 23 (figure 4) ainsi qu'entre l'insert 26 et les éléments transversaux du cadre 23 (figure 10).

D'une manière générale, les figures montrent que la face supérieure 36 du panneau 9 est plane et lisse alors que sa face inférieure 37 définit des bossages le long du cadre périphérique 23, le long des poutres de renfort 24 et le long des éléments de l'ossature 46 de l'insert 26. Le long des bossages, l'épaisseur du plateau 9 est typiquement de l'ordre de 105 à 110 mm. Ceci permet d'utiliser en particulier pour le cadre 23 et pour les éléments 47 et 48 du cadre 46, des éléments métalliques du commerce avec une dimension de 100 mm telle que mesurée parallèlement à l'épaisseur du plateau 9. Entre les bossages, l'épaisseur du plateau 9 est par exemple réduite dans un rapport 1 : 2 pour être ramenée par exemple à environ 50 mm.

Pendant le moulage, la résine imprègne, en plus des éléments déjà indiqués, les drapages 31 des poutres 24 et 56 de l'insert 26.

Lorsque le moulage est terminé, on creuse à travers la surface supérieure 36 du plateau 9 des ouvertures rectangulaires 61 (figure 11) en correspondance avec chaque tube 28 (figure 5) pour pouvoir enfoncer dans ces tubes les pieds 62 de chaque poteau d'angle 11. La ridelle avant 13 est fixée, par exemple collée, aux deux poteaux 11 avant et au bord avant du plateau 9 (figure 2). Les deux ridelles latérales 12 sont de préférence du type pivotant autour d'un axe inférieur 63 défini par des charnières 64 (figure 12) comprenant un élément 66 fixé latéralement au plateau 9 par exemple au moyen de vis venant en prise dans le cadre métallique 23 situé juste derrière la peau 27 du plateau 9 à cet endroit, et un élément 67 fixé le long du bord inférieur de la ridelle 12.

Les ridelles 12 et 13 sont de préférence réalisées composites avec une âme en mousse 68 remplissant l'espace entre un tube de bord supérieur 69 et un tube de bord inférieur 71, l'ensemble étant entouré par une peau 72 qui peut être, dans sa composition analogue, à la peau 27 du plateau 9, c'est à dire composée d'une armature fibreuse imprégnée d'une matrice organique qui définit une surface de la peau et lie les renforts 68, 69, 71 entre-eux et avec l'armature. L'élément de charnière 67 peut être fixé à la ridelle 12 au moyen de vis venant en prise dans des trous taraudés formés dans le tube 71 de la ridelle. Les poteaux 11 portent des gâches 73 (figure 2) dans lesquelles peuvent s'engager des loquets de verrouillage 74 pour maintenir les ridelles 12 en position dressée. Les loquets 74 sont portés par des guides de coulissement fixés à travers la peau 72, sur le tube de bord supérieur 69 des ridelles.

Bien-entendu, l'invention n'est pas limitée aux exemples décrits et représentés.

L'invention permet de réaliser un plateau tel que 9 destiné à être fixé de manière permanente au faux-châssis 6. Dans ce cas, les inserts de reprise d'effort seront répartis de manière à renforcer les points de fixation du plateau avec le faux-châssis. Un renfort central destiné à subir un effort ponctuel tel que l'effort de levage d'un vérin ne sera plus nécessaire. Il est possible de remplacer les ridelles basculantes par des ridelles fixes. Il est possible de ne prévoir aucune ridelle et/ou de prévoir des poteaux plus élevés et/ou un plus grand nombre de poteaux répartis le long de chaque bord longitudinal du plateau.

## Revendications

1. Structure de chargement pour véhicule utilitaire (1), comprenant au moins un plateau autoporteur (9) réalisé d'un seul tenant en une structure composite comprenant une matrice organique dans laquelle sont noyés des renforts structurels de rigidification (22, 23, 24) et/ou de reprise d'effort (26; 41, 42) dont certains au moins sont associés à des moyens (17, 28, 52, 66) de liaison avec le reste de la structure porteuse et/ou avec le véhicule, cette matrice définissant une surface d'une peau (27) enveloppant lesdits renforts, **caractérisée en ce que** l'un au moins des renforts structurels est une poutre comprenant une âme en mousse (29) entourée d'au moins un drapage de fibres (32, 33, 34).

2. Structure de chargement selon la revendication 1, **caractérisée en ce que** la peau (27) incorpore au moins une armature de fibres.

3. Structure de chargement selon la revendication 1 ou 2, **caractérisée en ce que** les renforts structurels comprennent des éléments en matière organique pré-formés (22, 29, 54).

4. Structure de chargement selon l'une des revendications 1 à 3, **caractérisée en ce que** les renforts structurels comprennent un cadre périphérique (23), de préférence métallique.

5. Structure de chargement selon la revendication 4, **caractérisée en ce que** les moyens de liaison comprennent des tubes (28) orientés perpendiculairement au plan principal du plateau, fixés au cadre (23), ouverts à travers une face de chargement (36) du plateau (9) et destinés à recevoir des poteaux (11) appartenant à la structure de chargement.

6. Structure de chargement selon la revendication 4 ou 5, **caractérisée en ce que** les moyens de liaison comprennent, pour le montage de ridelles basculantes (12), des éléments d'articulation (66) fixés à la face périphérique extérieure du cadre (23) et faisant saillie par rapport à la peau (27).

7. Structure selon l'une des revendications 1 à 6, **caractérisée en ce que** les renforts structurels comprennent au moins un bloc de bois (44, 53) agencé contre un élément métallique (42, 49) auquel est fixé au moins un des moyens de liaison (17, 52).

8. Structure de chargement selon l'une des revendications 1 à 7, **caractérisée en ce que** les moyens de liaison associés aux renforts structurels comprennent des moyens (17) de liaison avec un faux-châssis (6).

9. Structure de chargement selon l'une des revendications 1 à 8, **caractérisée en ce que** les moyens de liaison comprennent un élément (52) d'articulation avec l'extrémité mobile d'un vérin de levage (8) et/ou des éléments d'articulation (17) pour le basculement de la benne.

10. Structure de chargement selon l'une des revendications 1 à 8, **caractérisée en ce que** les renforts structurels comprennent une ossature métallique locale (46) supportant un axe d'articulation (52) en deux emplacements de la longueur de cet axe, lequel s'étend à découvert dans un évidement (57) du plateau (9) entre les deux emplacements, pour recevoir de manière articulée l'extrémité mobile d'un vérin de levage (8).

11. Structure de chargement selon la revendication 10, **caractérisée en ce que** l'ossature (46) fait partie intégrante d'un sous-ensemble composite (26) comportant son propre enveloppement fibreux (56) et inséré dans la structure composite du plateau (9).

12. Structure de chargement selon la revendication 10 ou 11, **caractérisée en ce que** l'ossature (46) est au moins indirectement insérée entre deux renforts structurels longilignes parallèles (24) de la structure composite.

13. Structure de chargement selon la revendication 12, **caractérisée en ce que** les deux renforts structurels longilignes sont deux poutres précitées comprenant une âme en mousse (29) entourée d'au moins un drapage de fibres (32, 33, 34).

14. Structure de chargement selon l'une des revendications 1 à 13, **caractérisée en ce que** les renforts structurels (22, 23, 24, 26) forment un assemblage sensiblement jointif occupant sensiblement le volume à l'intérieur de la peau (27), la matrice organique formant liant pour les renforts entre eux et avec la peau.

15. Structure de chargement selon l'une des revendications 1 à 14, **caractérisée en ce que** la structure de chargement comprend des ridelles (11, 12) essentiellement formées de renforts structurels (69, 71) auxquels sont fixés des moyens (67) pour le montage le long du pourtour du plateau (9) et noyés dans une matrice organique définissant une surface d'une peau enveloppant lesdits renforts.

16. Structure de chargement selon la revendication 15, **caractérisée en ce que** les renforts structurels comprennent un tube (69, 71) le long d'au moins un bord longitudinal de la ridelle (12, 13), et/ou au moins une âme longitudinale en mousse.

## Patentansprüche

1. Ladeaufbau für ein Nutzfahrzeug (1) mit mindestens einer einstückig ausgeführten, selbsttragenden Plattform (9) mit Verbundstruktur, die eine organische Matrix aufweist, in die Verstärkungsbauelemente (22, 23, 24) zur Versteifung und/oder Kraftaufnahme (26; 41, 42) eingebettet sind, wobei mindestens einigen der Verstärkungsbauelemente Mittel (17, 28, 52, 66) zur Verbidung mit dem Rest der Tragstruktur und/oder mit dem Fahrzeug zugeordnet sind, wobei die Matrix eine Oberfläche einer die Verstärkungen umhüllenden Haut (27) bildet, **dadurch gekennzeichnet, daß** mindestens eines der Verstärkungsbauelemente ein Träger ist, der einen Kern aus Schaumstoff (29) aufweist, der von mindestens einer Faserhülle (32, 33, 34) umgeben ist.

2. Ladeaufbau nach Anspruch 1, **dadurch gekennzeichnet, daß** in die Haut (27) mindestens eine Fasereinlage eingegliedert ist.

3. Ladeaufbau nach Anspruch 1 oder 2, **dadurch gekennzeichnet, daß** die Verstärkungsbauelemente vorgeformte Elemente (22, 29, 54) aus organischem Material umfassen.

4. Ladeaufbau nach einem der Ansprüche 1 bis 3, **dadurch gekennzeichnet, daß** die Verstärkungsbauelemente einen Umfangsrahmen (23) vorzugsweise aus Metall umfassen.

5. Ladeaufbau nach Anspruch 4, **dadurch gekennzeichnet, daß** die Verbindungsmittel senkrecht zur Hauptebene der Plattform gerichtete Rohre (28) umfassen, die am Rahmen (23) befestigt sind, auf einer Ladeseite (36) der Plattform (9) offen sind und dazu bestimmt sind, zum Ladeaufbau gehörende Pfosten (11) aufzunehmen.

6. Ladeaufbau nach Anspruch 4 oder 5, **dadurch gekennzeichnet, daß** die Verbindungsmittel für die Montage von verschwenkbaren Bordwänden (12) Gelenkelemente (66) umfassen, die an der äußeren Umfangsseite des Rahmens (23) befestigt sind und bezüglich der Haut (27) vorstehen.

7. Ladeaufbau nach einem der Ansprüche 1 bis 6, **dadurch gekennzeichnet, daß** die Verstärkungsbauelemente mindestens einen Holzblock (44, 53) umfassen, der an einem Metallelement (42, 49) angeordnet ist, an dem mindestens eines der Verbindungsmittel (17, 52) befestigt ist.

8. Ladeaufbau nach einem der Ansprüche 1 bis 7, **dadurch gekennzeichnet, daß** die den Verstärkungsbauelementen zugeordneten Verbindungsmittel Mittel (17) zur Verbindung mit einem Zwischenrahmen (6) umfassen.

9. Ladeaufbau nach einem der Ansprüche 1 bis 8, **dadurch gekennzeichnet, daß** die Verbindungsmittel ein Element (52) zur Anlenkung an das bewegliche Ende eines Hubzylinders (8) und/oder Gelenkelemente (17) zum Kippen der Mulde umfassen.

10. Ladeaufbau nach einem der Ansprüche 1 bis 8, **dadurch gekennzeichnet, daß** die Verstärkungsbauelemente ein örtliches Metallskelett (46) umfassen, das eine Gelenkachse (52) an zwei Stellen der Länge dieser Achse trägt, die sich in einer Aussparung (57) der Plattform (9) zwischen diesen beiden Stellen freigelegt erstreckt, um das bewegliche Ende eines Hubzylinders (8) gelenkig aufzunehmen.

11. Ladeaufbau nach Anspruch 10, **dadurch gekennzeichnet, daß** das Skelett (46) einen integrierenden Bestandteil einer Verbund-Untereinheit (26) bildet, die ihre eigene Faserumhüllung (56) aufweist und in die Verbundstruktur der Plattform (9) eingefügt ist.

12. Ladeaufbau nach Anspruch 10 oder 11, **dadurch gekennzeichnet, daß** das Skelett (46) mindestens indirekt zwischen zwei langgestreckte parallele Verstärkungsbauelemente (24) der Verbundstruktur eingesetzt ist.

13. Ladeaufbau nach Anspruch 12, **dadurch gekennzeichnet, daß** die beiden langgestreckten Verstärkungsbauelemente zwei der genannten Träger sind, die einen Kern aus Schaumstoff (29) aufweisen, der von mindestens einer Faserhülle (32, 33, 34) umgeben ist.

14. Ladeaufbau nach einem der Ansprüche 1 bis 13, **dadurch gekennzeichnet, daß** die Verstärkungsbauelemente (22, 23, 24, 26) ein im wesentlichen aneinander gestoßenes Gefüge bilden, das im wesentlichen das Volumen im Inneren der Haut (27) einnimmt, wobei die organische Matrix ein Verbindungselement für die Verstärkungen untereinander und mit der Haut bildet.

15. Ladeaufbau nach einem der Ansprüche 1 bis 14, **dadurch gekennzeichnet, daß** der Ladeaufbau Bordwände (69, 71) aufweist, die im wesentlichen von Verstärkungsbauelementen (69, 71) gebildet sind, an denen Mittel (67) zur Montage längs des Umfangs der Plattform (9) befestigt sind und die in eine organische Matrix eingebettet sind, die eine Oberfläche einer diese Verstärkungsbauelemente umhüllenden Haut bilden.

16. Ladeaufbau nach Anspruch 15, **dadurch gekennzeichnet, daß** die Verstärkungsbauelemente längs mindestens eines Längsrands der Bordwand (12, 13) ein Rohr (69, 71) und/oder mindestens einen Längskern aus Schaumstoff umfassen.

## Claims

1. Loading structure for commercial vehicle (1), comprising at least one self-supporting platform (9) made in a single piece in a composite structure comprising an organic matrix in which are embedded structural rigidification (22, 23, 24) and/or stress-absorption (26; 41, 42) reinforcing members some of which at least are combined with means (17, 28, 52, 66) for connection to the remainder of the bearing structure and/or to the vehicle, this matrix defining a surface of a skin (27) enveloping said reinforcing members, **characterized in that** at least one of the structural reinforcing members is a beam containing a core made of foam (29) surrounded by at least a wrap made of fibres (32, 33, 34).

2. Loading structure according to claim 1, **characterized in that** the skin (27) incorporates at least a reinforcement made of fibres.

3. Loading structure according to claim 1 or 2, **characterized in that** the structural reinforcing members comprise pre-shaped elements made of organic material (22, 29, 54).

4. Loading structure according to one of claims 1 to 3, **characterized in that** the structural reinforcing members comprise a peripheral frame (23), preferably of metal.

5. Loading structure according to claim 4, **characterized in that** the connection means comprise tubes (23) oriented perpendicular to the main plane of the platform, fixed to the frame (28), open through a loading face (36) of the platform (9) and intended to receive uprights (11) belonging to the loading structure.

6. Loading structure according to claim 4 or 5, **characterized in that** the connection means comprise, for the fitting of swinging side boards (12), articulation elements (66) fixed to the outer peripheral face of the frame (23) and projecting relative to the skin (27).

7. Structure according to one of claims 1 to 6, **characterized in that** the structural reinforcing elements comprise at least one wooden block (44, 53) placed against a metal element (42, 49) to which is fixed at least one of the connection means (17, 52).

8. Loading structure according to one of claims 1 to 7, **characterized in that** the connection means associated with the structural reinforcing elements comprise means (17) for connection to a sub-frame (6).

9. Loading structure according to one of claims 1 to 8, **characterized in that** the connection means comprise an element (52) for articulation with the mobile end of a jack (8) and/or articulation elements (17) for the tipping of the dump body.

10. Loading structure according to one of claims 1 to 8, **characterized in that** the structural reinforcing elements comprise a local metal framework (46) supporting an articulation axle (52) at two points along this axle, which extends exposed into a recess (57) of the platform (9) between the two points, in order to receive in an articulated manner the mobile end of a jack (8).

11. Loading structure according to claim 10, **characterized in that** the framework (46) forms an integral part of a composite sub-assembly (26) provided with its own fibrous envelope (56) and inserted into the composite structure of the platform (9).

12. Loading structure according to claim 10 or 11, **characterized in that** the framework (46) is at least indirectly inserted between two parallel elongate structural reinforcing members (24) of the composite structure.

13. Loading structure according to claim 12, **characterized in that** the two elongate structural reinforcing members are two aforementioned beams comprising a core (29) made of foam surrounded by at least one wrap (32, 33, 34) made of fibres.

14. Loading structure according to one of claims 1 to 13, **characterized in that** the structural reinforcing members (22, 23, 24, 26) form an approximately joined assembly substantially occupying the space inside the skin (27), the organic matrix forming a binder for the reinforcing members between themselves and with the skin.

15. Loading structure according to one of claims 1 to 14, **characterized in that** the loading structure comprises side boards (11, 12) essentially formed by structural reinforcing members (69, 71) to which are fixed means (67) for fitting along the perimeter of the platform (9) and embedded in an organic matrix defining a surface of a skin enveloping said reinforcing members.

16. Loading structure according to claim 15, **characterized in that** the structural reinforcing members comprise a tube (69, 71) along at least one longitudinal edge of the side board (12, 13) and/or at least one longitudinal core made of foam.
